# EUROPEAN PATENT APPLICATION

(11) **EP 2 107 821 A2**
(43) Date of publication of application: **07.10.2009**
(21) Application number: 09002527.1
(22) Date of filing: 23.02.2009
(51) Int. Cl.: H04Q 11/00

(54) **Network systems and communications equipment**

(30) Priority: 31.03.2008 JP 2008089132
(71) Applicant: Hitachi Communication Technologies, Ltd., Tokyo 140-0013 (JP)
(72) Inventor: Oishi, Takumi, Tokyo 100-8220 (JP); Takase, Masayuki, Tokyo 100-8220 (JP)
(74) Representative: Strehl Schübel-Hopf & Partner

(57) **Abstract**

A duplicate system includes an active side (0 side) and a standby side (1 side). An OLT includes an autodiscovery function (1003) which, when the OLT is active, determines the next starting time of autodiscovery procedure of the standby side and notifies the standby side of the above starting time, a table of management information (1005) that holds the line information of a partner with which the OLT forms the duplicate system and the next starting time of autodiscovery procedure of the OLT, and a function of switching active side (1002) that calculates a timing of switching active side. A function of receiving data from ONT (1004) in the OLT includes a function of detecting data sequence number (1102) and a function of detecting queue length (1101). Moreover, a function of sending data of ONT (803) includes a function of assigning sequence number (901) and a function of discarding data (902).

## Description

### BACKGROUND OF THE INVENTION

The present invention relates to data transmission equipment that shares one optical fiber with a plurality of users, and more specifically, relates to the data transmission equipment of a passive optical network (PON).

Today, as the communication method used for Internet access, FTTH (Fiber To The Home) using optical fibers is becoming popular in place of ADSL (Asynchronous Digital Subscriber Line) that uses telephone lines. One of the methods of realizing this FTTH is EPON (Ethernet Passive Optical Network) formulated by Institute of Electrical and Electronics Engineers (IEEE). In EPON, one optical fiber from a central office of a common carrier is shared with a plurality of (as many as 32) users, and the optical fiber is branched near the user by means of an optical splitter and connected to the user equipment. Here, the equipment installed in the central office of a common carrier refers to as an OLT (optical line terminating equipment) and the equipment installed in the user's residence is referred to as an ONT (optical network terminating equipment).

Considering communication originating from a user in EPON, a plurality of optical fibers are combined into one optical fiber at the optical splitter. For this reason, when a plurality of users send data disorderly, the data will collide with each other at the optical splitter and the communication would be impossible. In order to avoid this, the OLT assigns a communicable time period to all the ONTs, respectively. This assignment is performed by a function of bandwidth assignment in the OLT, and the time period assigned to each ONT is referred to as a "grant". By observing the grant and sending data, each ONT can avoid the data collision at the optical splitter.

The above discussion is also true of GEPON (Gigabit EPON) that improved the transmission speed of EPON, or GPON (Gigabit-Capable PON) formulated by International Telecommunication Union Telecommunication Standardization Sector (ITU).

In order to discover a newly added ONT, an autodiscovery procedure is defined. By implementing this procedure periodically, the OLT can recognize a newly added ONT, so that the ONT can communicate with the OLT.

The above discussion is also true of GEPON. In GPON, a ranging procedure for measuring the distance from the OLT to the respective ONTs is defined, and as in the above-described autodiscovery procedure, after finishing the ranging the ONT can communicate with OLT.

On the other hand, as for a redundant system, as disclosed in JP-A-11-122172 there is a scheme (called "Path Protection") of superimposing lights having a plurality of wavelengths over one optical fiber and " duplicating the logical communication path".

This technology is disclosed for instance in "Ethernet Passive Optical Networks", Glen Kramer, McGraw-Hill, ISBN 0-07-144562-5, Chapter 5, pp 45-64, and in JP-A-11-122172.

### SUMMARY OF THE INVENTION

In EPON, a newly added ONT is detected periodically performing an autodiscovery procedure, however, in this case, the data transmission from ONTs is prohibited for a fixed period time called a "discovery window". This permits a newly added ONT to reliably communicate with the OLT. Accordingly, even if a grant is assigned in advance, the ONT cannot send data and ends up storing the data in a buffer. Upon completion of the discovery window, the grant is assigned again so that the data stored in the buffer can be sent, however, the grant nullified by the discovery window remains lost and will not be compensated. That is, a loss of bandwidth occurs here.

The above discussion is completely true of GEPON. Moreover, in GPON, the data transmission from ONTs is prohibited for a specified time period similarly at the time of execution of ranging. Accordingly, although hereinafter described as EPON for sake of simplicity, completely the same discussion is applied to GEPON and GPON with regard to the loss of bandwidth.

Although EPON is applied to the Internet connection for ordinary homes, it is applicable also to the leased line service for enterprises. The leased line service for enterprises is used in IP-VPN or the like for connecting branch offices, for example. Although IP-VPN is utilized for various purposes, the example of IP-VPN is the so-called mission critical data communication, such as online transaction, which is open throughout the year and the service of which is not allowed to interrupt. In this case, in order to guarantee the continuity of the IP-VPN service even in case of failure, such as an equipment failure, a redundant system using "equipment redundancy" is required. In particular, a system so called "1+1 protection" is the safest system with regard to failures, such as an equipment failure, because all the communication channels between an OLT and ONTs are duplicated and the data to be communicated is always duplicated, as well. However, also in the 1+1 protection system and in the redundant system of JP-A-11-122172, the above-described loss of bandwidth due to the autodiscovery procedure will occur. This loss of bandwidth is equal to a service interruption although it happens for an extremely short time. Therefore, the problem to be solved here is to prevent the loss of bandwidth in execution of the autodiscovery procedure and in execution of ranging in this redundant system.

In order to prevent the service interruption caused by the loss of bandwidth due to the autodiscovery procedure, in the present invention the loss of bandwidth is prevented using the following technique.

One portion of a duplicate system will be referred to as the active side (0 side), and the other portion will be referred to as the standby side (1 side). The OLT comprises an autodiscovery function which, when the OLT itself is active, determines the next starting time of autodiscovery procedure of the standby side and notifies the standby side of the above time. The OLT further comprises a table of management information that holds the line information of a partner with which the OLT forms the duplicate system and the next starting time of autodiscovery procedure of the OLT itself. The OLT further comprises a function of switching active side that calculates a timing of switching active side. A function of receiving data from ONT in OLT comprises a function of detecting data sequence number and a function of detecting queue length.

Moreover, a function of sending data of ONT comprises a function of assigning sequence number and a function of discarding data.

Advantageously, the loss of bandwidth of the data originating from an ONT due to the autodiscovery procedure in the case of EPON or GEPON or due to the ranging in the case of GPON can be prevented and the precise bandwidth can be assured.

Other objects, features and advantages of the invention will become apparent from the following description of the embodiments of the invention taken in conjunction with the accompanying drawings.

### BRIEF DESCRIPTION OF THE DRAWINGS

FIG. 1 a figure of a network system that is a prerequisite of the present invention.
FIG. 2 shows a data flow in a redundant system according to the present invention.
FIG. 3 is a chart of bandwidth assignment.
FIG. 4 shows the loss of bandwidth caused by an autodiscovery procedure of the related art.
FIG. 5 is a chart of an autodiscovery procedure according to the present invention.
FIG. 6 shows a case where the loss of bandwidth due to the autodiscovery procedure is avoided by switching active side according to the present invention.
FIG. 7 is a chart of switching active side.
FIG. 8 is a block diagram of an ONT.
FIG. 9 shows a PON sending function of the ONT.
FIG. 10 is a block diagram of an OLT.
FIG. 11 shows a PON receiving function of the OLT.
FIG. 12 is a block diagram of L2SW.
FIG. 13 shows a table of management information.
FIG. 14 is a flow of a function of switching active side in the case of the active side.
FIG. 15 is a process flow of the PON receiving function of the OLT in the case of the active side.
FIG. 16 is a flow of a function of switching active side in the case of the standby side.
FIG. 17 is a process flow of the PON receiving function of the OLT in the case of the standby side.
FIG. 18 is a flow of sending packets in the ONT.
FIG. 19 is a flow of a PON sending function of the ONT.
FIG. 20 is a flow of activating an autodiscovery procedure of a function of switching active side of an active OLT.
FIG. 21 is a flow of activating an autodiscovery procedure of a function of switching active side of a standby OLT.
FIG. 22 is a check flow of a table of management information of an autodiscovery function in the OLT.
FIG. 23 is a flow of setting a table of management information of the autodiscovery function in the OLT (only in the case of the standby side).
FIG. 24 is a flow of copying packets of L2SW.
FIG. 25 is a flow of reading a queue of L2SW.
FIG. 26 is a figure of a network system using WDM.
FIG. 27 is a table of management information for the use of WDM.
FIG. 28 is a chart of switching active side in case of failure.
FIG. 29 is a block diagram of a PON receiving function of the OLT.
FIG. 30 is a process flow of the PON receiving function of the OLT in the case of the active side.

### DETAILED DESCRIPTION OF THE EMBODIMENTS

Hereinafter, embodiments of the present invention will be described in detail using the accompanying drawings.

### «Embodiment 1»

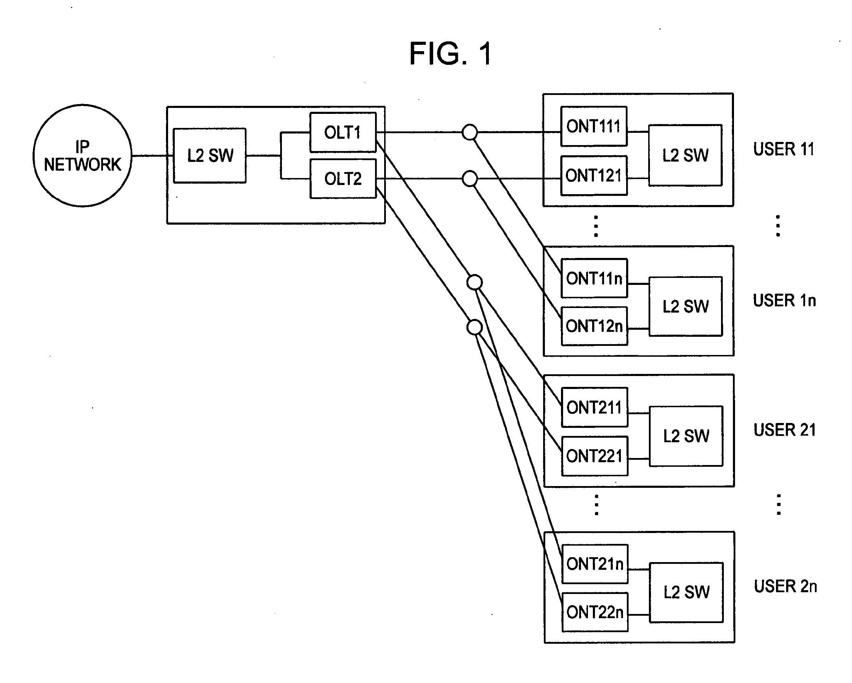

FIG. 1 is a figure of a network system that is a prerequisite of the present invention. Assume that all the users have implemented the 1+1 protection. A user 11 has implemented the 1+1 protection using a combination of OLT1 and ONT111 as well as OLT2 and ONT121. Likewise, a user In has implemented the 1+1 protection using a combination of OLT1 and ONT11n as well as OLT2 and ONT12n. Hereinafter, although the user 11 will be described, the same description is completely applied to other users, as well.

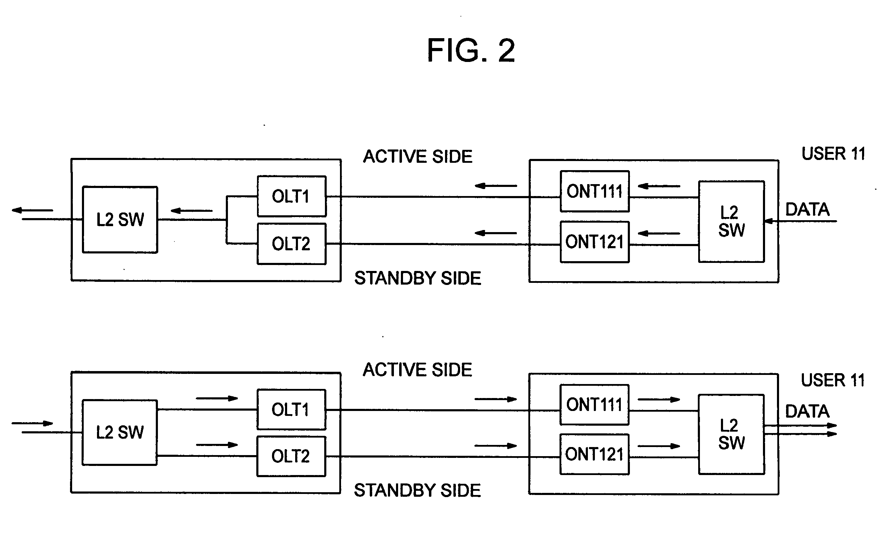

FIG. 2 shows an actual communication data flow in the redundant system of FIG. 1. Here, assume that OLT1 and ONT111 are on the actual side and OLT2 and ONT121 are on the standby side. In the direction from ONT to OLT, first, data is copied by L2SW and input to ONT111 and ONT121, respectively. These data pass through optical fibers and reach OLT1 and OLT2, respectively. The active OLT1 sends the received data as it is, while the standby OLT2 discards the data. This can prevent the copied data from flowing to the upper stream of the OLT and prevent an additional bandwidth from being consumed. On the other hand, in the direction from OLT to ONT, the data copied by L2SW reaches ONT111 and ONT121, respectively, and both of them are directly input to L2SW. Since the copied data is also sent from L2SW, the amount of data becomes twice the original one. Note that, as in OLT1 and OLT2, the data that the active ONT1 received may be sent as is and the data that the standby ONT2 received may be discarded. This case can prevent the copied data from flowing to the downstream of ONT and prevent an additional bandwidth from being consumed.

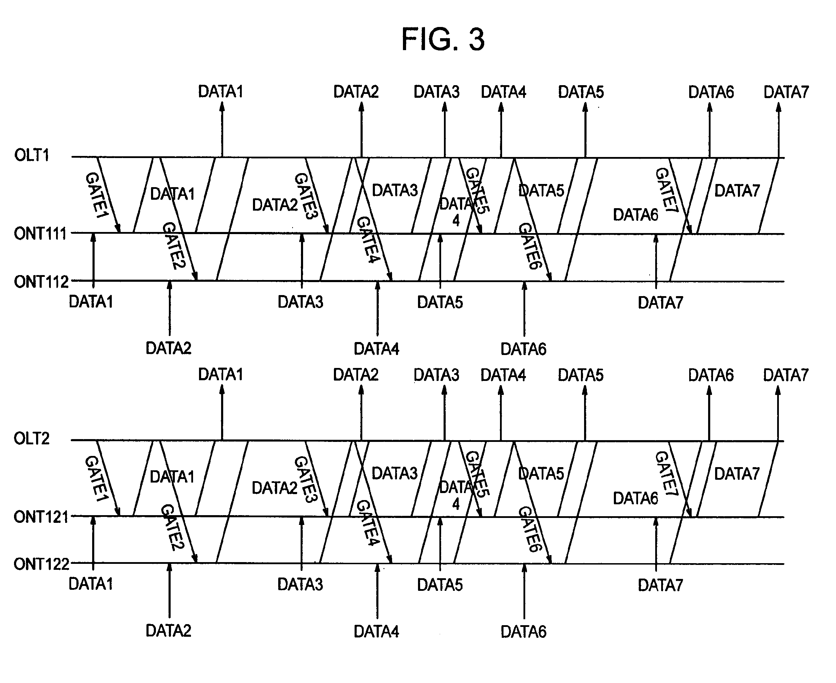

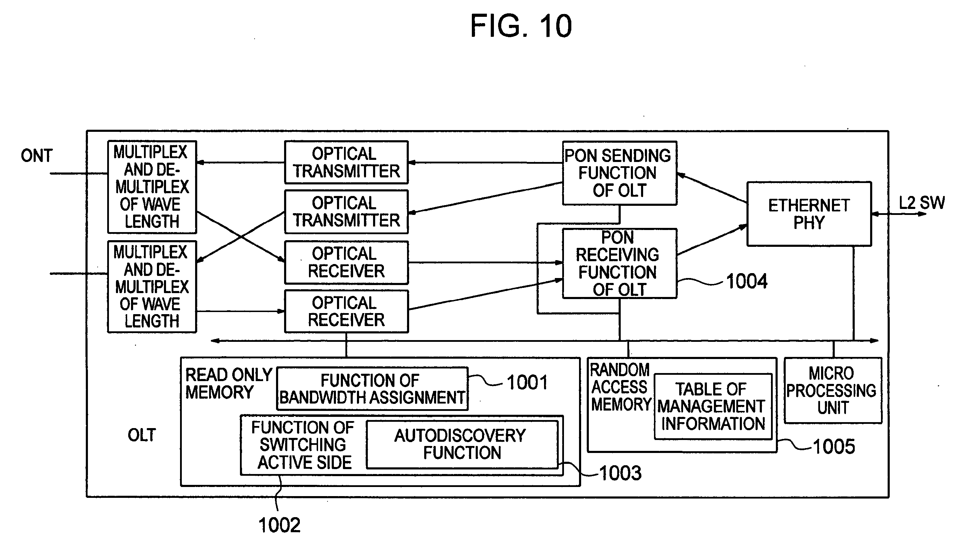

FIG. 3 shows a case where the conventional method of assigning grants to the respective ONTs by OLT1 and OLT2 is applied to the 1+1 protection system. A GATE message from the OLT contains information on the grant assigned to the ONT (the start time of the grant and the duration of the grant). At the start time of the grant, each ONT will start to send data. The ONT can send the data until the duration of the grant expires. Note that, the above-described GATE message is sent by a function of bandwidth assignment (1001 of FIG. 10) in the OLT.

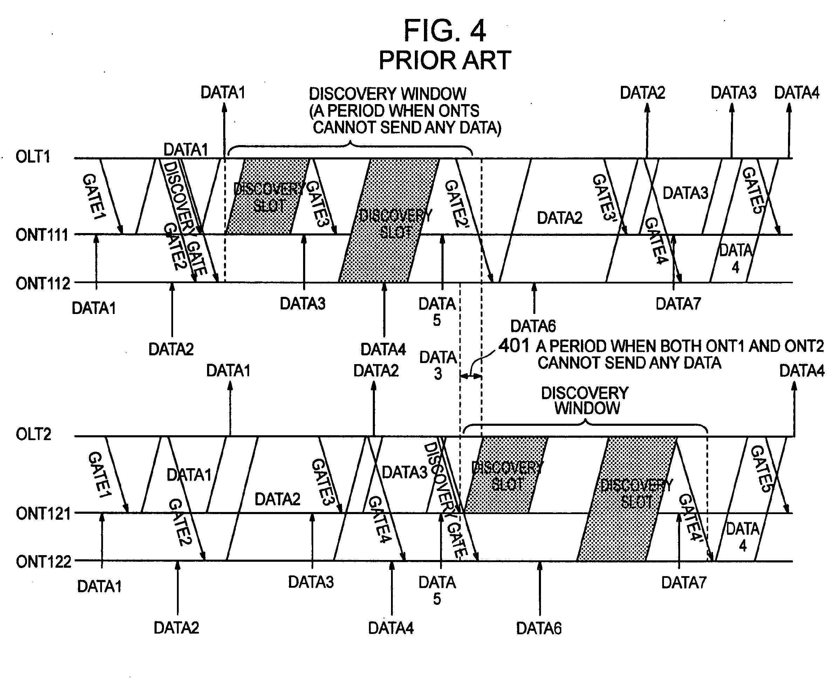

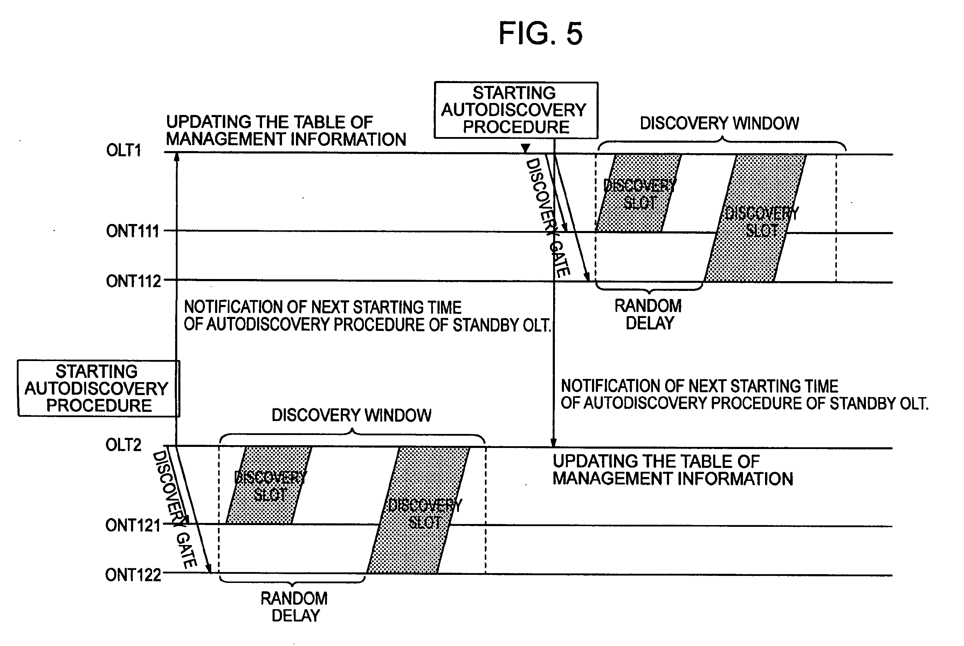

FIG. 4 shows a method of executing the conventional autodiscovery procedure. A discovery gate message is sent from the respective OLTs to all the ONTs. The ONT that received this message must stop sending data for a period of discovery window contained in the message. The grant assigned during this period becomes invalid, and the grant is re-assigned after the discovery window (GATE2' and GATE3' of OLT1, and GATE4' of OLT2). From this view, it is understood that the discovery window of OLT1 and the discovery window of OLT2 are overlapped with each other and during this period the both OLT1 and OLT2 cannot receive any data from ONT (401 of FIG. 4). This is namely the period during which the loss of bandwidth occurs, and one objective of the present invention is to prevent this period from occurring. The specific technique therefore is described in the next FIG. 5.

FIG. 5 shows an autodiscovery procedure according to the present invention. Upon transmission of a discovery gate, the active side notifies the standby OLT of the next starting time of autodiscovery procedure of the standby side. The above-described discovery gate is sent by an autodiscovery function (1003 of FIG. 10) in the OLT. The autodiscovery procedure is periodically executed and this is controlled by an autodiscovery procedure timer. In the active side, the autodiscovery procedure is started when the value of this timer becomes 0. Moreover, a specified value (at this interval, the autodiscovery procedure is periodically executed) of the timer is set again as the value of the timer. Then, the next starting time of autodiscovery procedure of the standby side is calculated and notified to the standby OLT.
For example, a half of the specified value of the timer is added to the present time, and the resultant value is used as the next starting time of autodiscovery procedure of the standby side.

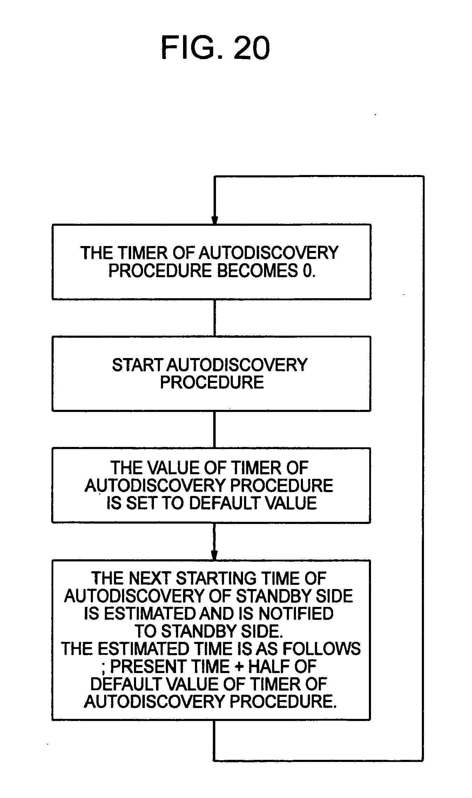

The standby side also has a timer as with the active side, however, in the standby side, the autodiscovery procedure will not be started immediately even if the value of the timer becomes 0, unlike the active side. In the above, the autodiscovery procedure is started when the start time notified from the active side has passed. Otherwise, a random value is re-set as the value of the timer. The reason for this operation is for waiting the autodiscovery procedure of the active side to be completed. Therefore, in calculating the next starting time of autodiscovery procedure of the standby side in active side, the active side has to consider reliably completing the autodiscovery procedure of the active side. This process flow will be described in FIG. 20, FIG. 21, and FIG. 22.

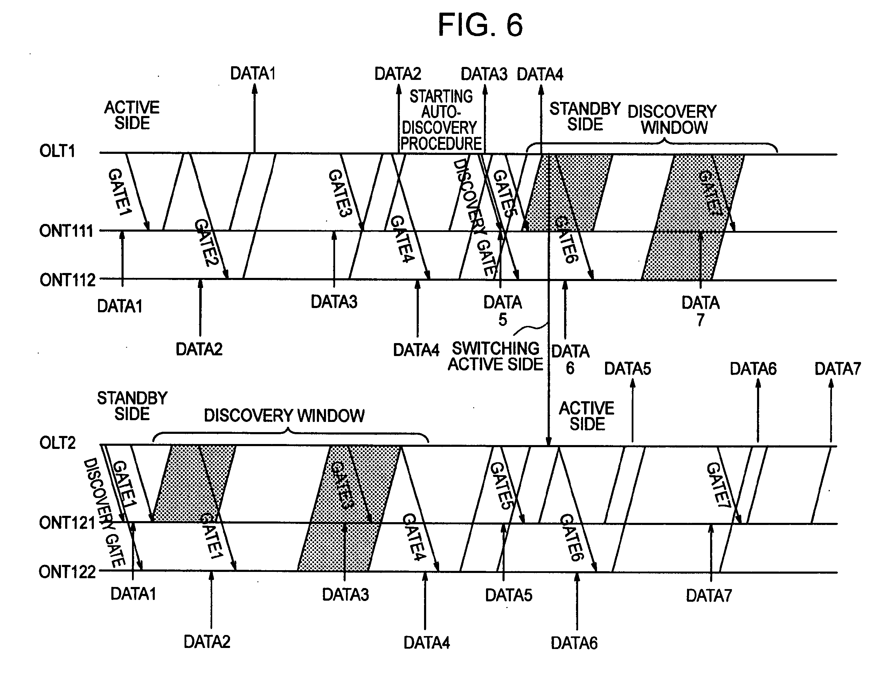

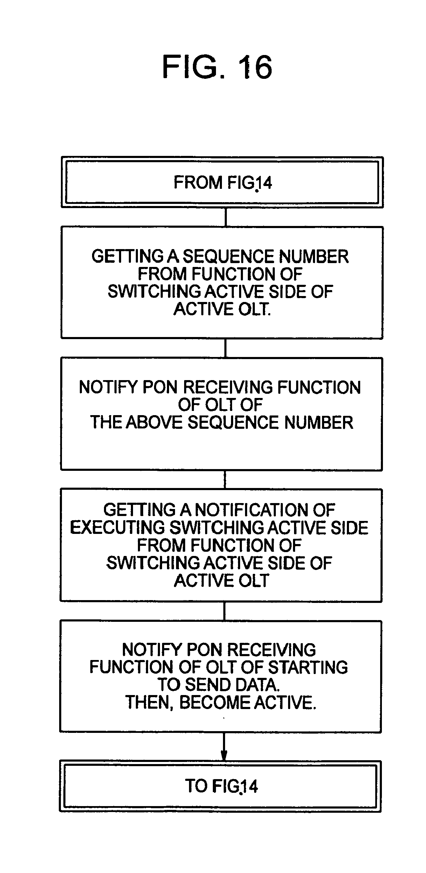

FIG. 6 shows a timing to switch from the active side to the standby side in order to avoid the loss of bandwidth due to the autodiscovery procedure, according to the present invention. Here, how OLT1 switches from the active side to the standby side and OLT2 switches from the standby side to the active side is shown. In OLT1, the next starting time of autodiscovery procedure of the OLT1 itself is notified in advance using the method shown in FIG. 5. After starting the autodiscovery procedure, the ONT will not be able to send any data due to the discovery window, and therefore, promptly after starting the autodiscovery procedure, switching active side is performed to avoid the loss of bandwidth. Although this timing will be described in the flowchart of FIG. 16, with reference to FIG. 6 this timing is immediately after OLT1 finishes sending data 4. Due to the 1+1 protection system, data sent by a user reach OLT1 and OLT2 via ONT111 and ONT121, respectively. The active OLT1 sends the received data to the further upstream L2SW, while the standby OLT2 discards the received data. The operations of OLT1 and OLT2 are switched to each other at the timing of switching active side. That is, in OLT2, the received data will be sent to L2SW, while in OLT1, the received data will be discarded.

Here, an important point is to ensure that a new active side sends to L2SW the data supposed to be sent by the grant that was nullified by the discovery window after the transition from the active side to the standby side.

For this reason, in the present invention, the above transition is controlled by the method as shown in FIG. 5 so that the discovery windows may not overlap in the active side and the standby side.

Furthermore, if ONT111 holds the data supposed to be sent by the grant that was nullified after the transition to the standby side, this data will be sent to OLT1 by the grant that is reassigned after the discovery window, as in GATE2' and GATE3' of FIG. 4. This means that the timing to send data is delayed, and accordingly this delay time will accumulate every time the autodiscovery procedure is executed. In terms of divided time periods, the data cannot be sent for exactly the time period of the discovery window and the loss of bandwidth occurs here. Therefore, the data supposed to be sent by the grant that was nullified by the discovery window needs to be discarded instead of being held in the ONT. In the present invention, this operation will be referred to as "draining" and the detail will be described later. Moreover, the data discarded by "draining" needs to be sent from ONT to OLT in the new active side after switching active side. That is, there should be neither duplication nor loss in the data sent before and after the timing of switching active side, and this timing of switching active side is important, which is described next.

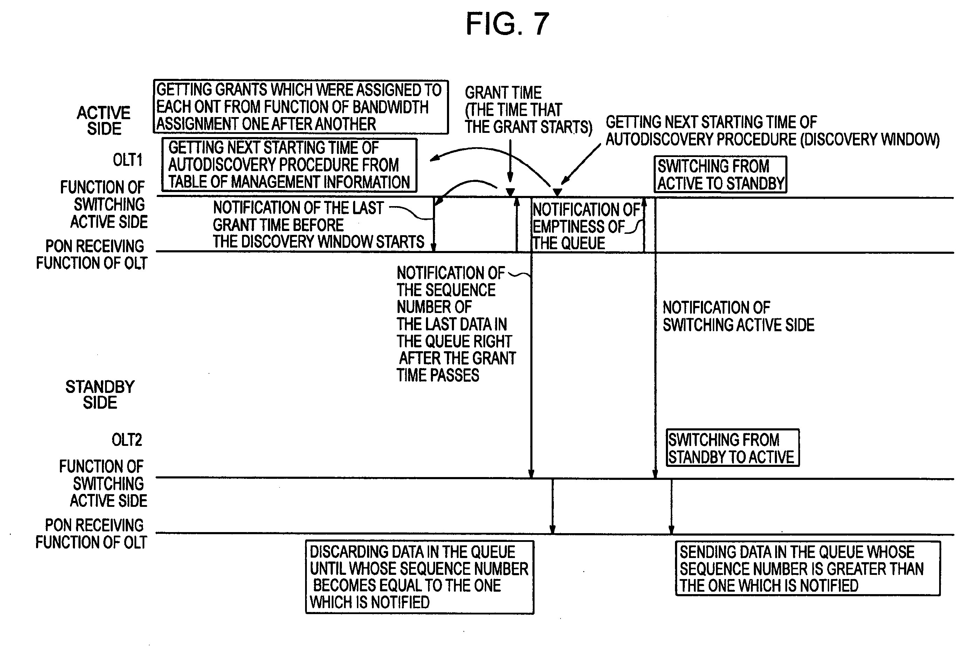

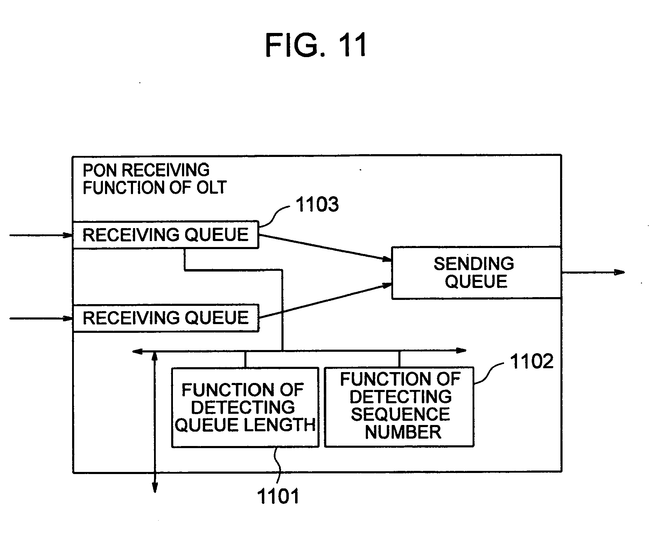

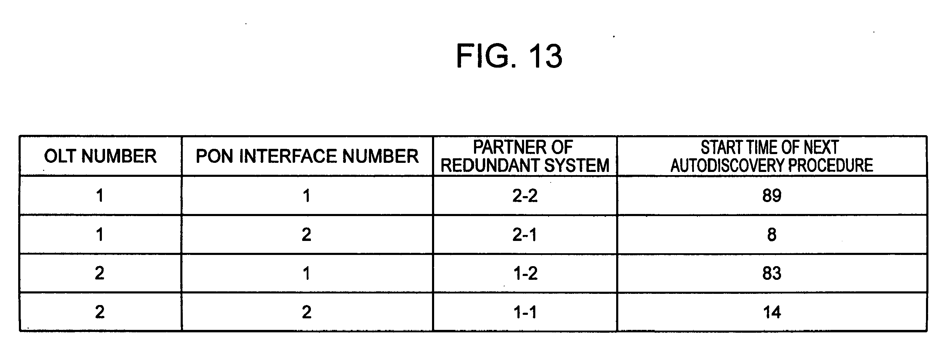

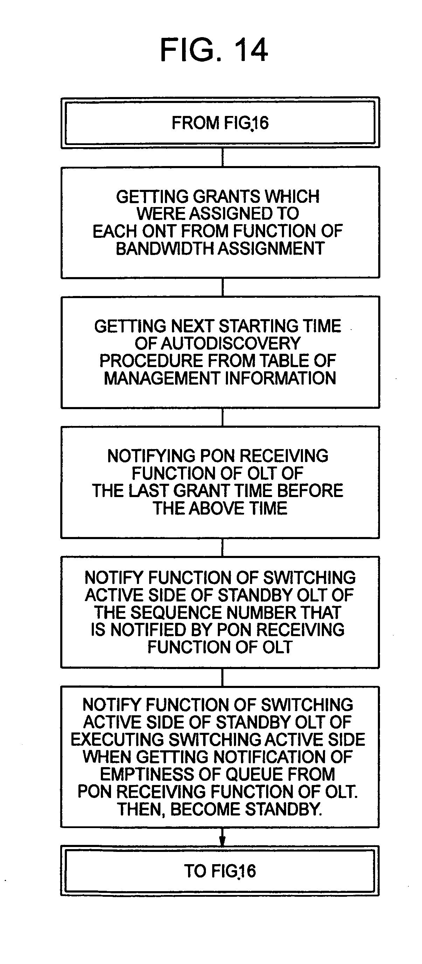

FIG. 7 shows a method of switching from the active side to the standby side according to the present invention. The process flow thereof will be described in FIG. 14, FIG. 15, FIG. 16, and FIG. 17. First, in a function of switching active side (1002 of FIG. 10) in the active OLT, the grants that were assigned to each ONT were obtained from the function of bandwidth assignment one after another (1001 of FIG. 10). The grants here are a time at which ONT starts sending data and a duration during which ONT may continue sending data. On the other hand, the next starting time of autodiscovery procedure is read from a table of management information (1005 of FIG. 10, FIG. 13). From the both pieces of information, the last grant time before the discovery window starts is calculated and notified to a PON receiving function of OLT (1005 of FIG. 10). In the PON receiving function of OLT, a function of detecting sequence number (1102 of FIG. 11) detects the sequence number of the last data in the receiving queue (1103 in FIG. 11) right after the grant time passes, and notifies the function of switching active side of the above sequence number. The function of switching active side notifies the function of switching active side in the standby OLT of this sequence number. The notification of the sequence number is transferred to the PON receiving function of the standby OLT. The PON receiving function of OLT will discard data in the queue until whose sequence number becomes equal to the one that is notified, while it will store the data, whose sequence number is greater than the one that is notified, into the queue until a notification of switching to active side arrives. The function of detecting sequence number (1102) also detects these sequence numbers.

After further time passes and the time to start the autodiscovery procedure of the active side passed, in the PON receiving function of the active OLT, the instance the receiving queue (1103 of FIG. 11) becomes empty (immediately if the receiving queue is already empty), the emptiness of the queue is notified to the function of switching active side. Whether or not the queue is empty is determined by whether or not a value detected by the function of detecting queue length (1101 of FIG. 11) is 0. The function of switching active side of the active OLT switches to the standby side, and also sends a notification of switching from standby side to active side, to the function of switching active side of the standby OLT. The reason why the timing of switching active side is set this way is that the next grant of the active side is nullified by the discovery window and accordingly no data will be sent to the active OLT hereinafter. Upon receipt of this notification, the function of switching active side of the standby OLT immediately switches to the active side, and notifies its own PON receiving function of OLT of a start of data transmission to L2SW. Upon receipt of this notification, the PON receiving function of OLT starts sending data in the receiving queue to L2SW.

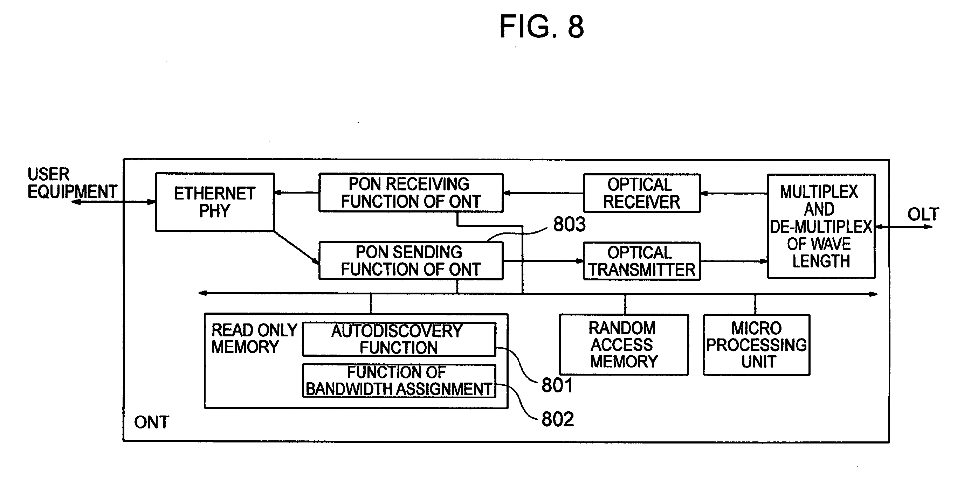

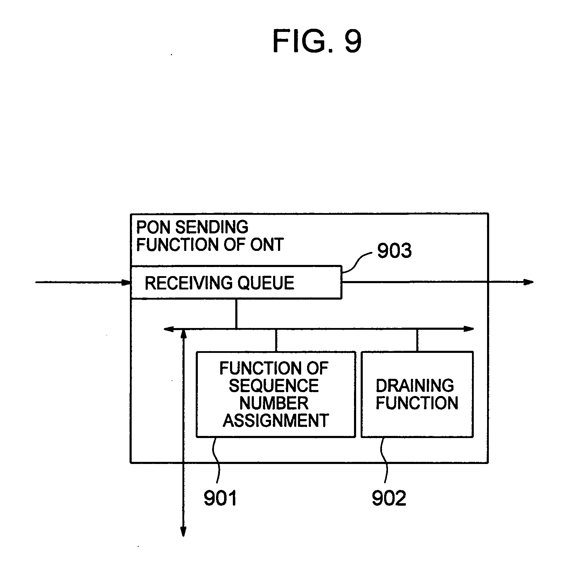

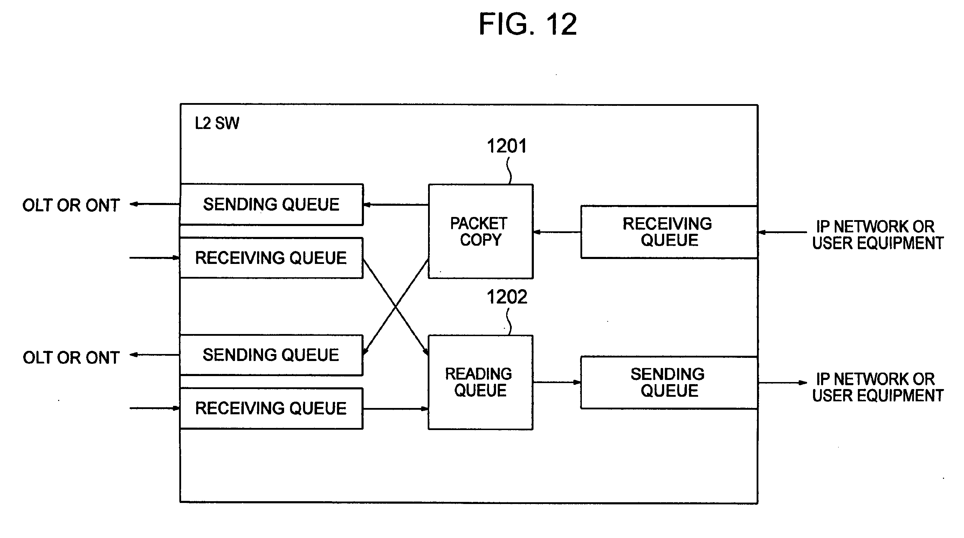

As described above, using the sequence number, the duplication/loss of data before and after the timing of switching active side is avoided. This sequence number is assigned by a function of sequence number assignment (901 of FIG. 9) of a PON sending function of ONT (803 of FIG. 8). The data that a user sent is copied by L2SW and input to the active ONT and the standby ONT. A packet copy 1201 of FIG. 12 performs this copy using hardware. Since completely the same data is thus input to ONT111 and ONT121, if the initial values of the sequence numbers of the both are set to an identical value, the sequence numbers that are hereinafter assigned by the PON sending function of ONT become the same.

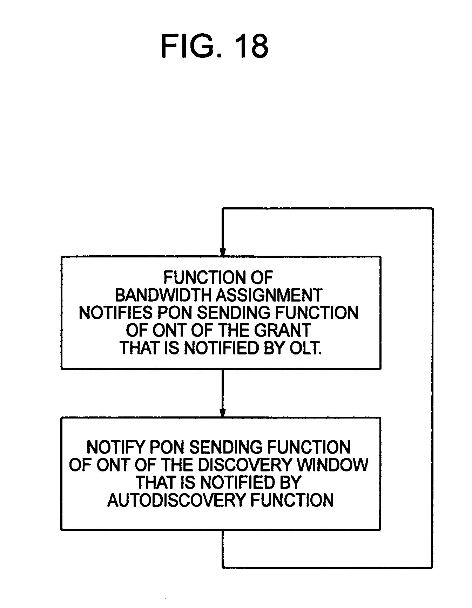

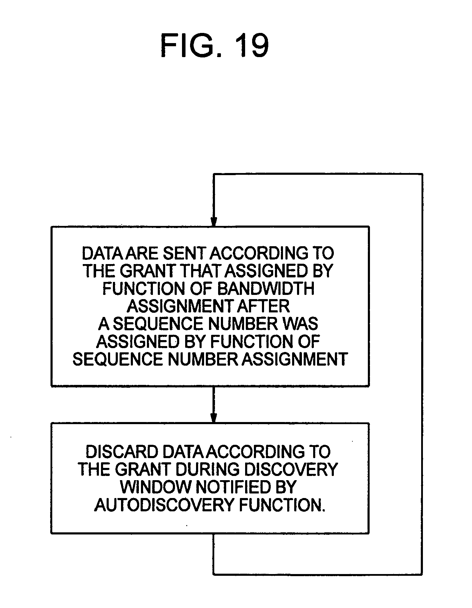

Finally, "draining" is described. FIG. 8 is a block diagram of the ONT, and FIG. 9 is a block diagram of the PON sending function of ONT 803 in FIG. 8. A function of bandwidth assignment 802 and autodiscovery function 801 in a ROM are executed by an MPU. Usually, the PON sending function of ONT 803 sends data according to the grants that were assigned from OLT by the function of bandwidth assignment 802. Here, upon receipt of a discovery GATE message, the autodiscovery function 801 instructs the PON sending function of ONT 803 to stop sending data, based on the start time of discovery window and the duration of the window. Upon receipt of this instruction, the PON sending function of ONT 803 discards the data in a receiving queue 903 by means of a draining function 902. In this way, the PON sending function of ONT 803 sends or discards data as instructed by the function of bandwidth assignment 802 and the autodiscovery function 801. The data discarded by "draining" in the new standby side is the data that was supposed to be sent during the period of discovery window, and this data will be sent by a new active side. Therefore, if the data is sent after discovery window, OLT will receive unnecessary data, resulting in loss of bandwidth. The above-described "draining" can prevent this loss of bandwidth. The process flow thereof will be described in FIG. 18 and FIG. 19.

As described above, by means of the functions described in FIG. 6 and FIG. 7, the OLT always switches from the active side to the standby side when performing the autodiscovery procedure. In switching from the active side to the standby side, the next starting time of autodiscovery procedure is notified to the standby side as described in FIG. 5, namely, the next time of switching active side is also indicated here. In other words, when the OLT that was on the standby side becomes active, the next timing of switching active side is always specified by the old active OLT.

Therefore, the procedures for the active side and the standby side to further perform switching active side and then return to the original side are completely the same as those of FIG. 5, FIG. 6, and FIG. 7.

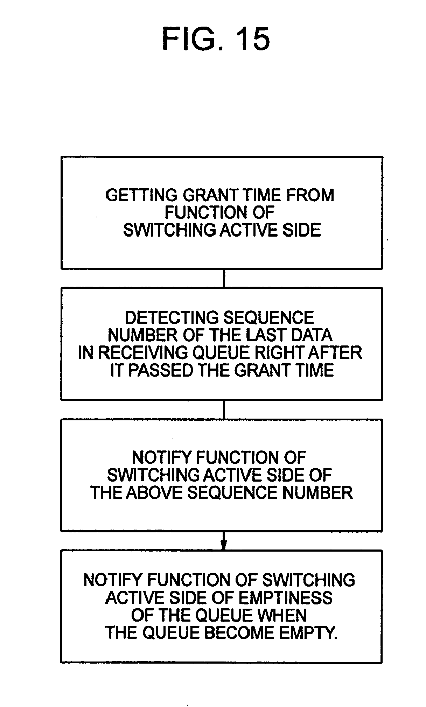

FIG. 10 is a block diagram of the OLT, and FIG. 11 is a block diagram of the PON receiving function of OLT 1004 in FIG. 10. The function of bandwidth assignment 1001 and function of switching active side 1002 in a ROM are executed by an MPU. A specific example of a table of management information 1005 in a RAM is shown in FIG. 13. The OLT is characterized by the function of switching active side 1002. By means of the function of switching active side 1002, the switching between the active side and the standby side is carried out and the loss of bandwidth due to the autodiscovery procedure is prevented. The function of switching active side 1002 includes the whole of the conventional autodiscovery function 1003. Upon receipt of data, the PON receiving function of OLT holds the data in a receiving queue 1103. Here, the sequence number of the data is detected by the function of detecting data sequence number 1102, and the number of data held in the queue is detected by the function of detecting queue length 1101. The sequence number and the number of data held in the queue that were detected here are used to calculate the timing of switching active side in the function of switching active side 1002. This process flow is shown in FIG. 15.

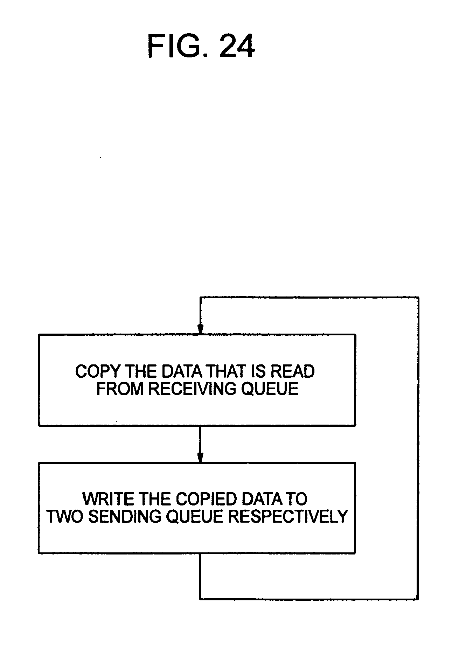

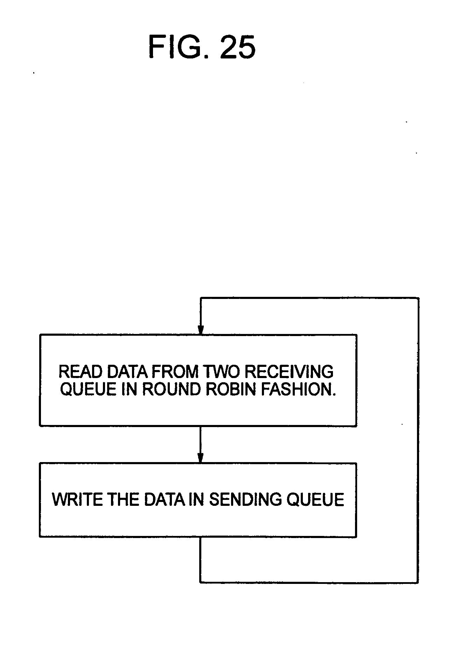

FIG. 12 is a block diagram of the L2SW. Data packets input from an IP network or a user equipment are stored in a receiving queue. Next, by means of the packet copy 1201, the respective data packets are copied and then stored in sending queues, respectively. Finally, the data packets are sent to the sending queues toward OLT or ONT. On the other hand, data packets input from the OLT or the ONT are stored in a receiving queue. Next, by means of the reading queue 1202, the respective data packets are fetched and then stored in the sending queue, respectively. Finally, the data packets are sent to an IP network or a user equipment. These process flows are shown in FIG. 24 and FIG. 25.

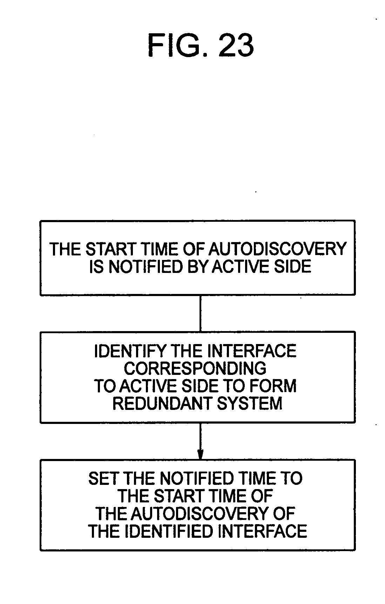

FIG. 13 shows an example of the table of management information 1005 in OLT. With the OLT number and the PON interface number, lines are identified and paired lines are specified. The method of specifying the pair is a combination of OLT number and PON interface number, which is put in the column of redundancy state. The pair is written when a maintenance person makes redundancy setting. The next starting time of autodiscovery procedure indicates the time to start the next autodiscovery procedure as the name suggests. As show in FIG. 5, when the ONT itself is on the standby side, and upon receipt of a notification of the next starting time of autodiscovery procedure of the standby side from the autodiscovery function of the active side, the autodiscovery function of the standby side writes the above starting time in this table. The process flow will be described in FIG. 23.

FIG. 14 and FIG. 15 show process flows of switching active side in the active side. The function of switching active side 1002 gets grants that were assigned to each ONT, from the function of bandwidth assignment 1001. Next, the function of switching active side 1002 reads the next starting time of autodiscovery procedure from the table of management information 1005, and notifies the PON receiving function of OLT 1004 of the last grant time T before this start time. After getting T, the PON receiving function of OLT 1004 waits until the last grant time T passes, and then detects a sequence number S of the last data held in the receiving queue 1103. If the receiving queue 1103 becomes empty after sending this S to the function of switching active side 1002, this fact is notified to the function of switching active side 1002. Upon notification of the sequence number S from the PON receiving function of OLT 1004, the function of switching active side 1002 instantly notifies the function of switching active side of the standby OLT of the sequence number S. Thus, the standby side can determine until which data to discard and from which data to send. Moreover, upon notification of emptiness of the receiving queue 1103, the function of switching active side 1002 notifies the function of switching active side of the standby OLT of executing switching active side, and then the function of switching active side 1002 itself becomes standby. This enables the standby OLT to be active.

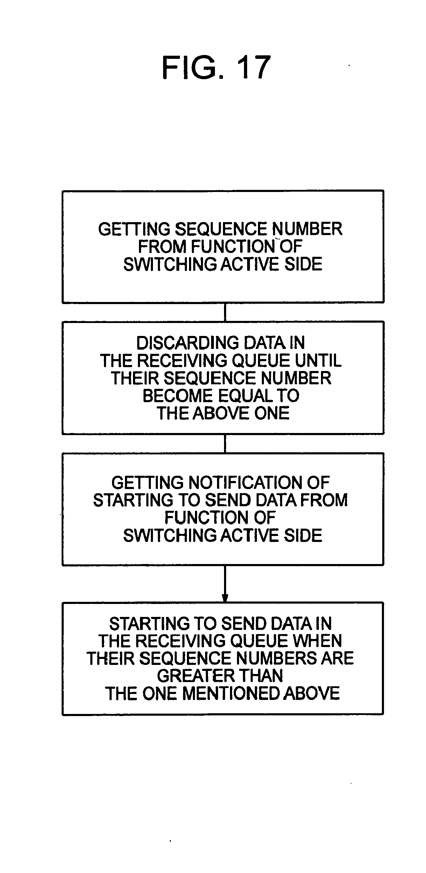

FIG. 16 and FIG. 17 show process flows of switching active side in the standby side. Upon notification of the sequence number S from the active OLT, the function of switching active side 1002 notifies the PON receiving function of OLT 1004 of the above sequence number. Moreover, upon notification of executing switching active side from the active OLT, the function of switching active side 1002 notifies the PON receiving function of OLT 1004 of starting to send data, and then becomes active. Upon notification of the sequence number S from the function of switching active side 1002, the PON receiving function of OLT 1004 discards data in the receiving queue 1103 until the sequence number thereof becomes equal to S. Thereafter, upon notification of starting to send data, the PON receiving function of OLT 1004 starts to send data in the receiving queue 1103 when their sequence numbers are equal to or greater than S+1. This can guarantee that there is neither duplication nor loss in the data before and after switching.

FIG. 18 and FIG. 19 show process flows of sending data to OLT in ONT. The function of bandwidth assignment 802 of ONT notifies the PON sending function of ONT of the grants which the function of bandwidth assignment 1001 of OLT has notified using the GATE message. Moreover, the autodiscovery function 801 of ONT notifies the PON sending function of ONT of the information of the discovery window which the autodiscovery function 1003 of OLT has notified using the discover Gate message. The PON sending function of ONT sends the data in the receiving queue 903 according to the notified grants. In this case, a sequence number is assigned to each data by the function of assigning sequence number 901. Moreover, when the information of the discovery window is notified, the data in the receiving queue 903 is discarded by the draining function 902 according to the grants during the discovery window.

FIG. 20 shows a process flow of the autodiscovery procedure in the active OLT. When a timer of autodiscovery procedure becomes 0, the autodiscovery procedure is started and the value of this timer is set to a specified value. Moreover, the next starting time Tn of autodiscovery procedure of the standby side is estimated and notified to the function of switching active side of the standby OLT. The estimated time is as follows: the present time plus a half of the specified value of the timer of the autodiscovery procedure. Here, the value added to the present time may be other than a half of the specified value of the timer, and an arbitrary value may be used if it is set so that the autodiscovery procedure of the active side and the autodiscovery procedure of the standby side may not overlap with each other.

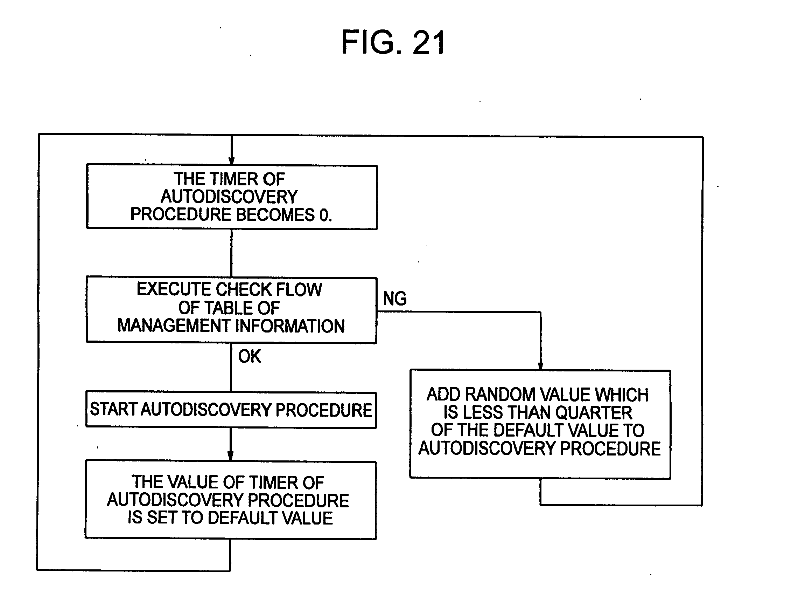

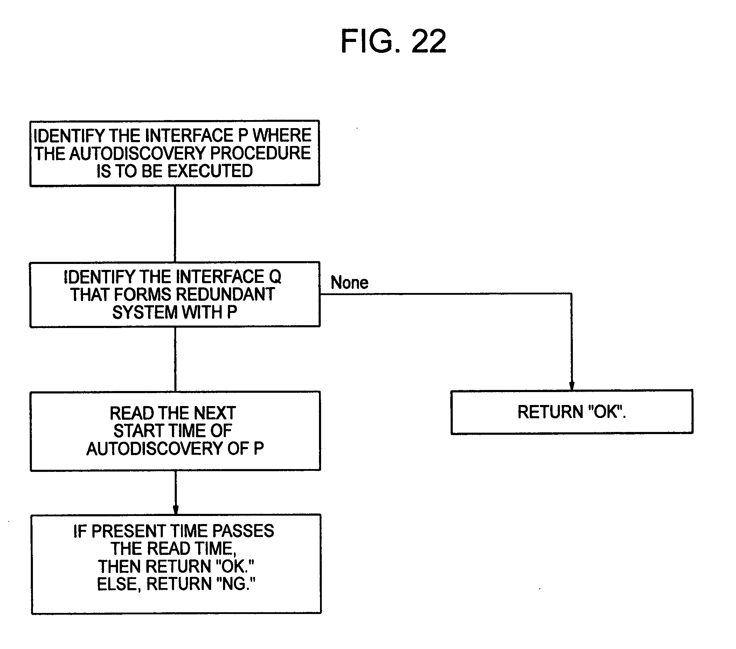

FIG. 21 is a process flow of the autodiscovery procedure in the standby OLT, and FIG. 22 is a process flow of a step of checking the table of management information 1005 in the process flow of FIG. 21. When the timer of autodiscovery procedure becomes 0, the check flow of the table of management information 1005 of FIG. 22 is executed. If this result is OK, the autodiscovery procedure is started and the value of the timer is set to the specified value. If the result is NG, a random value that is less than a quarter of the specified value is added to the value of the timer. This random value may be arbitrary if it is no greater than the specified value.

In the check flow of the table of management information 1005, a PON interface P where the autodiscovery procedure is to be executed is identified, and an interface Q that forms a redundant system with the above interface is identified from the table of management information 1005. Here, if None is obtained, OK is returned because the redundant system has not been formed. In the case of other than None, the next starting time Tn of autodiscovery procedure of P is read because the redundant system has been formed. If the read Tn passes the present time, return OK, otherwise, return NG.

This can ensure that the autodiscovery procedure of the standby side will not overlap with the autodiscovery procedure of the active side.

FIG. 23 is a process flow of a procedure of setting a value to the table of management information 1005. The next starting time Tn of autodiscovery procedure is notified to the function of switching active side 1002 of the standby OLT by the function of switching active side 1002 of the active OLT. An interface corresponding to the active side to form the redundant system is identified from the table of management information 1005, and Tn is set in the column of the next starting time of autodiscovery procedure.

### «Embodiment 2»

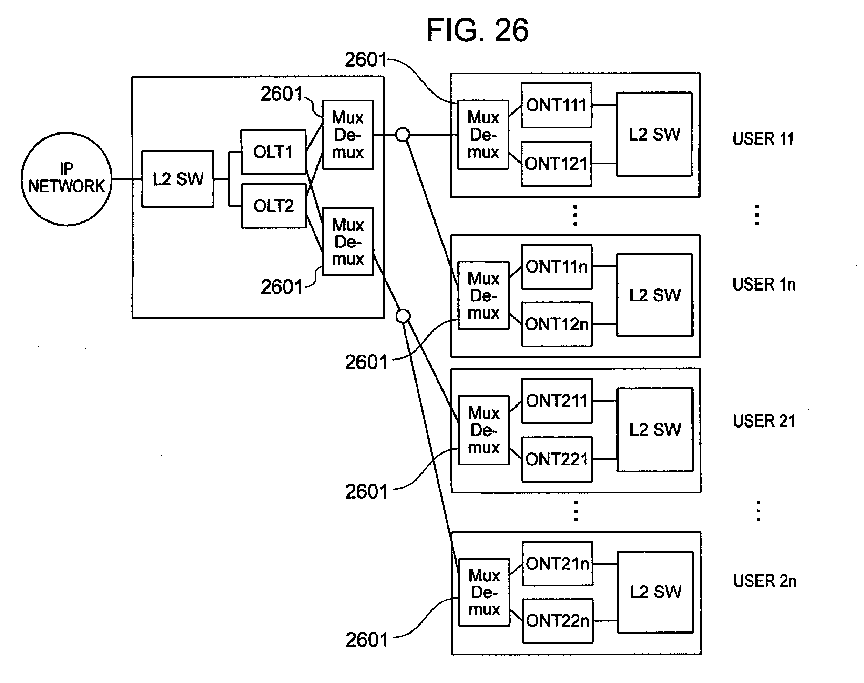

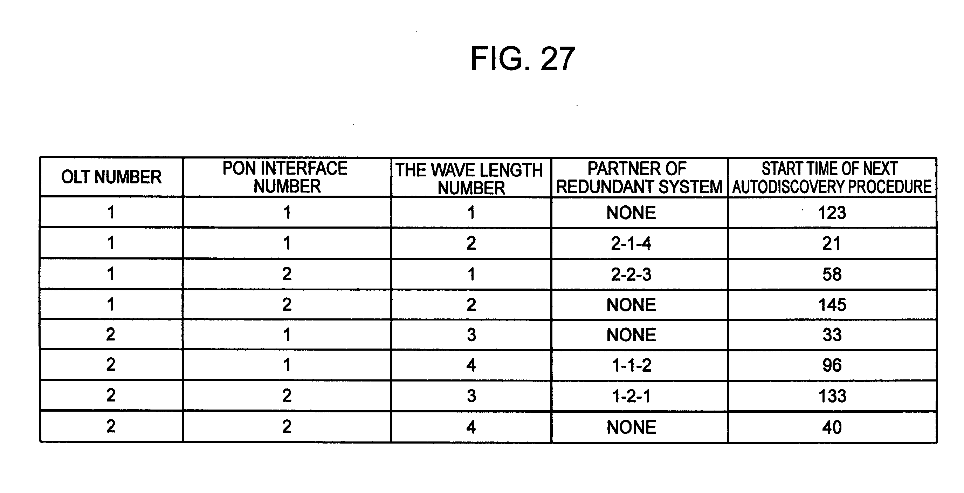

Moreover, as a second embodiment, a case of using WDM (Wavelength Division Multiplexing) using a plurality of wavelengths of light is shown in FIG. 26. OLT1 and OLT 2 communicate with ONT by using different wavelengths, respectively. Both OLT1 and OLT2 use two wavelengths, respectively, i.e., a total of four wavelengths are used here. The lines forming the redundant system by OLT1 and OLT2 are combined by MuxDemux 2601 and connected to one optical fiber. With lights of different wavelengths over this one optical fiber, two kinds of communications of OLT1 and ONT111 as well as OLT2 and ONT121 are multiplexed, for example. This embodiment corresponds to a case where the 1+1 protection system is implemented with one optical fiber by using WDM. Also here, completely the same as the foregoing description is applied. FIG. 27 shows an example of the table of management information 1005 in this embodiment. This table is the same as that of Embodiment 1 except that the currently-used wavelength number of light is added to the information for identifying the line. Moreover, each equipment configuration, the sequences such as the procedure of switching active side, and the process flows in the equipments are all the same as those of Embodiment 1 except that WDM (Wavelength Division Multiplexing) is carried out using MuxDemux.

### «Embodiment 3»

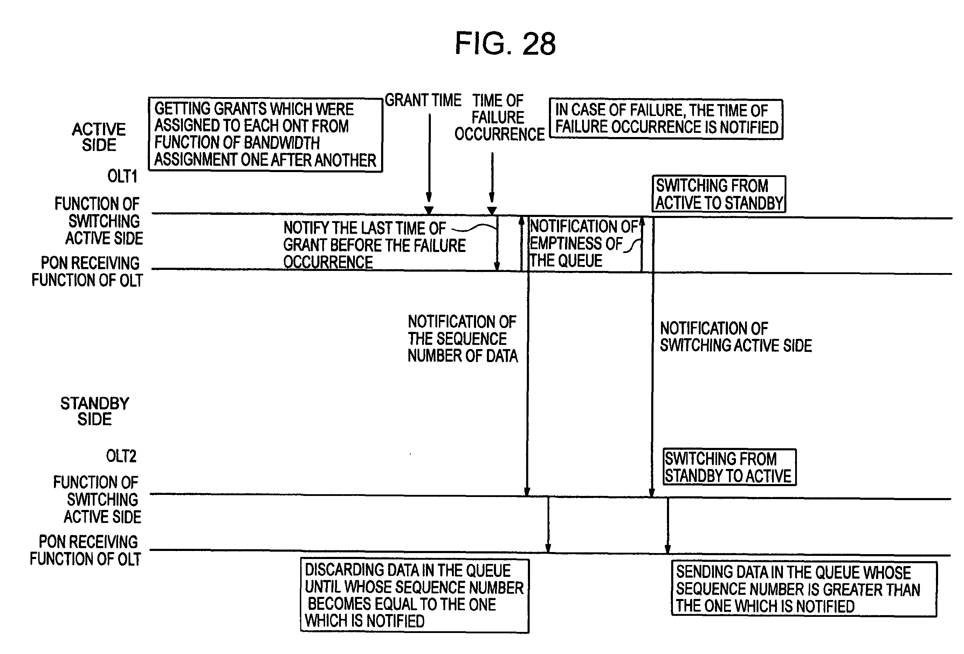

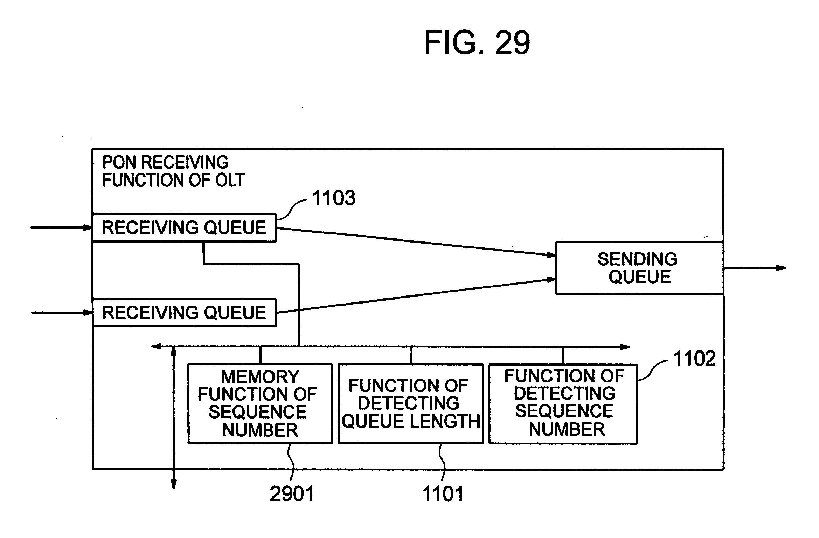

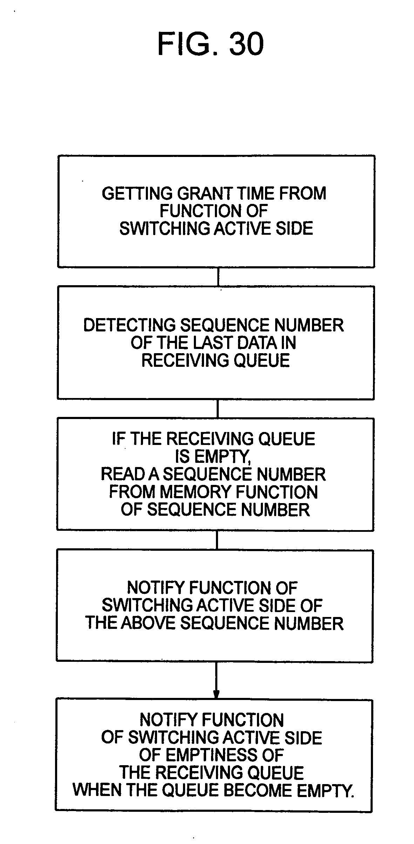

As a third embodiment, a case where a certain failure occurs in OLT and the switching active side is performed is shown in FIG. 28, FIG. 29, and FIG. 30. FIG. 28 shows the timing of switching active side, FIG. 29 shows the PON receiving function of OLT, and the others are all the same as those of Embodiment 1. A difference between FIG. 28 and FIG. 7 lies in that a notification of a time of failure occurrence is received in stead of reading the next starting time of autodiscovery procedure from the table of management information. Accordingly, the function of switching active side 1002 in OLT notifies the PON receiving function of OLT 1004 of the last time of grant before the failure occurrence. Moreover, when detecting the sequence of the last data in the receiving queue 1103 in the PON receiving function of OLT 1004 of FIG. 29, the queue may be empty depending on the timing. For this reason, a memory function of sequence number 2901 for storing the sequence number of the lastly received data is added. This is the function that always stores the sequence number of the last data when the receiving queue 1103 becomes empty. Thus, the sequence number of data that is received by the grant before the time of failure occurrence can be reliably notified to the standby side, and the sequence number of data to be sent can be determined after the standby side switches to the active side. The process flow of the PON receiving function of OLT 1004 is shown in FIG. 30. A difference between FIG. 30 and FIG. 15 lies in that if the receiving queue 1103 is empty in detecting a sequence number, the sequence number is read from the memory function of sequence number 2901.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A network system, comprising: a first communication equipment having a first central office equipment (OLT1) and a second central office equipment (OLT2); and a plurality of second communication equipments having a first subscriber equipment (ONT111, ..., ONT11n, ONT211, ..., ONT21n) and a second subscriber equipment (ONT121, ..., ONT12n, ONT221, ..., ONT22n), wherein
the first central office equipment (OLT1) and the first subscriber equipment (ONT111, ..., ONT11n, ONT211, ..., ONT21n) are connected to each other using a first optical fiber, and the second central office equipment (OLT2) and the second subscriber equipment (ONT121, ..., ONT12n, ONT221, ..., ONT22n) are connected to each other using a second optical fiber, and wherein
the first central office equipment (OLT1) and the second central office equipment (OLT2) respectively execute a subscriber equipment discovery procedure of discovering a newly added subscriber equipment, in nonoverlapping timing.

2. The network system according to claim 1, wherein the timing of executing the subscriber equipment discovery procedure is determined by the first central office equipment (OLT1) and notified to the second central office equipment (OLT2).

3. The network system according to claim 1, wherein
the first communication equipment is connected to a first network via a first repeater (L2SW), and the second communication equipment is connected to a second network via a second repeater (L2SW), wherein
the second repeater (L2SW) copies data received from the second network and sends the same data to the first subscriber equipment (ONT111, ..., ONT11n, ONT211, ..., ONT21n) and the second subscriber equipment (ONT121, ..., ONT12n, ONT221, ..., ONT22n), wherein
the first central office equipment (OLT1) sends the data received from the first subscriber equipment (ONT111, ..., ONT11n, ONT211, ..., ONT21n) to the first repeater (L2SW), and the second central office equipment (OLT2) discards the data received from the second subscriber equipment (ONT121, ..., ONT12n, ONT221, ..., ONT22n), and wherein
in starting the subscriber equipment discovery procedure, the first central office equipment (OLT1) instructs the second central office equipment (OLT2) to store the data received from the second subscriber equipment (ONT121, ..., ONT12n, ONT221, ..., ONT22n) instead of discarding the same.

4. The network system according to claim 3, wherein
in the first subscriber equipment (ONT111, ..., ONT11n, ONT211, ..., ONT21n) and the second subscriber equipment (ONT121, ..., ONT12n, ONT221, ..., ONT22n), the same data received from the second repeater (L2SW) is assigned an identical sequence number, wherein
at the beginning of the subscriber equipment discovery procedure, the first central office equipment (OLT1) notifies the second central office equipment (OLT2) of a sequence number of the latest received data from the first subscriber equipment (ONT111, ..., ONT11n, ONT211, ..., ONT21n) among data stored in the first central office equipment (OLT1), and wherein
the second central office equipment (OLT2) will not discard but store data whose assigned sequence number is greater than the sequence number notified from the first central office equipment (OLT1).

5. The network system according to claim 4, wherein upon notification of a fact that the first central office equipment (OLT1) sent the data of the notified sequence number to the second repeater (L2SW), the second central office equipment (OLT2) sends data to the second repeater (L2SW).

6. The network system according to claim 1, wherein the first subscriber equipment (ONT111, ..., ONT11n, ONT211, ..., ONT21n) discards data that was supposed to be sent to the first central office equipment (OLT1) during execution of the subscriber equipment discovery procedure as indicated by the first central office equipment (OLT1).

7. The network system according to claim 1, wherein
the first communication equipment is connected to a first network via a first repeater (L2SW), and the second communication equipment is connected to a second network via a second repeater (L2SW), wherein
the second repeater (L2SW) copies data received from the second network and sends the same data to the first subscriber equipment (ONT111, ..., ONT11n, ONT211, ..., ONT21n) and the second subscriber equipment (ONT121, ..., ONT12n, ONT221, ..., ONT22n), wherein
the first central office equipment (OLT1) sends the data received from the first subscriber equipment (ONT111, ..., ONT11n, ONT211, ..., ONT21n) to the first repeater (L2SW), and the second central office equipment (OLT2) discards the data received from the second subscriber equipment (ONT121, ..., ONT12n, ONT221, ..., ONT22n), wherein
in starting the subscriber equipment discovery procedure, the first central office equipment (OLT1) instructs the second central office equipment (OLT2) to store the data received from the second subscriber equipment (ONT121, ..., ONT12n, ONT221, ..., ONT22n) instead of discarding the same, and wherein
the second central office equipment (OLT2) executes the subscriber equipment discovery procedure at a timing that is determined by the first central office equipment (OLT1) and notified from the first central office equipment (OLT1), and then at the beginning of the subscriber equipment discovery procedure, the second central office equipment (OLT2) instructs the first central office equipment (OLT1) to store the data received from the first subscriber equipment (ONT111, ..., ONT11n, ONT211, ..., ONT21n) instead of discarding the same.

8. A communication equipment comprising a plurality of second communication equipments having a first subscriber equipment (ONT111, ..., ONT11n, ONT211, ..., ONT21n) and a second subscriber equipment (ONT121, ..., ONT12n, ONT221, ..., ONT22n), the communication equipment further comprising a first central office equipment (OLT1) and a second central office equipment (OLT2), wherein
the first central office equipment (OLT1) and the first subscriber equipment (ONT111, ..., ONT11n, ONT211, ..., ONT21n) are connected to each other using a first optical fiber, and the second central office equipment (OLT2) and the second subscriber equipment (ONT121, ..., ONT12n, ONT221, ..., ONT22n) are connected to each other using a second optical fiber, and wherein
the first central office equipment (OLT1) and the second central office equipment (OLT2) respectively execute a subscriber equipment discovery procedure of discovering a newly added subscriber equipment, in nonoverlapping timing.

9. The communication equipment according to claim 8, wherein the timing of executing the subscriber equipment discovery procedure is determined by the first central office equipment (OLT1) and notified to the second central office equipment (OLT2).

10. The communication equipment according to claim 8, wherein
the second communication equipment is connected to a second repeater (L2SW), wherein
the first central office equipment (OLT1) sends the data received from the second repeater (L2SW) via the first subscriber equipment (ONT111, ..., ONT11n, ONT211, ..., ONT21n), to the first repeater (L2SW), wherein
the second central office equipment (OLT2) discards the same data as the data received from the second repeater (L2SW) via the second subscriber equipment (ONT121, ..., ONT12n, ONT221, ..., ONT22n), and wherein
in starting the subscriber equipment discovery procedure, the first central office equipment (OLT1) instructs the second central office equipment (OLT2) to store the data received from the second subscriber equipment (ONT121, ..., ONT12n, ONT221, ..., ONT22n) instead of discarding the same.

11. The communication equipment according to claim 10, wherein
in the first subscriber equipment (ONT111, ..., ONT11n, ONT211, ..., ONT21n) and the second subscriber equipment (ONT121, ..., ONT12n, ONT221, ..., ONT22n), the same data received from the second repeater (L2SW) is assigned an identical sequence number, wherein
at the beginning of the subscriber equipment discovery procedure, the first central office equipment (OLT1) notifies the second central office equipment (OLT2) of a sequence number of the latest received data from the first subscriber equipment (ONT111, ..., ONT11n, ONT211, ..., ONT21n) among data stored in the first central office equipment (OLT1), and wherein
the second central office equipment (OLT2) will not discard but store data whose assigned sequence number is greater than the sequence number notified from the first central office equipment (OLT1).

12. The communication equipment according to claim 11, wherein upon notification of a fact that the first central office equipment (OLT1) sent the data of the notified sequence number to the second repeater (L2SW), the second central office equipment (OLT2) sends data to the second repeater (L2SW).

13. A communication equipment connected to a first communication equipment having a first central office equipment (OLT1) and a second central office equipment (OLT2), the communication equipment further comprising a first subscriber equipment (ONT111, ..., ONT11n, ONT211, ..., ONT21n) and a second subscriber equipment (ONT121, ..., ONT12n, ONT221, ..., ONT22n), wherein
the first central office equipment (OLT1) and the first subscriber equipment (ONT111, ..., ONT11n, ONT211, ..., ONT21n) are connected to each other using a first optical fiber, and the second central office equipment (OLT2) and the second subscriber equipment (ONT121, ..., ONT12n, ONT221, ..., ONT22n) are connected to each other using a second optical fiber, and wherein
the first subscriber equipment (ONT111, ..., ONT11n, ONT211, ..., ONT21n) discards data that was supposed to be sent to the first central office equipment (OLT1) during execution of the subscriber equipment discovery procedure as indicated from the first central office equipment (OLT1).
